# EUROPEAN PATENT SPECIFICATION

(11) **EP 3 179 147 B1**
(45) Date of publication and mention of the grant of the patent: **16.10.2019**
(21) Application number: 15829086.6
(22) Date of filing: 16.07.2015
(51) Int. Cl.: F16L 15/00, B29C 45/27

(54) **PIPE JOINT**
ROHRVERBINDUNG
RACCORD DE TUYAU

(30) Priority: 04.08.2014 JP 2014159072
(43) Date of publication of application: 14.06.2017
(73) Proprietor: Bridgestone Corporation, Tokyo 104-8340 (JP)
(72) Inventor: IIZUKA, Tatsuro, Tokyo 104-8340 (JP)
(74) Representative: Oxley, Robin John George
(86) International application number: PCT/JP2015/070453
(87) International publication number: WO 2016/021389

(56) References cited:
- WO-A1-2004/042241
- WO-A1-2014/073263
- JP-A- H02 163 592
- JP-A- 2008 298 090
- JP-A- 2008 298 090
- JP-A- 2014 095 410
- US-A1- 2013 240 528

## Description

### Technical Field

The present invention relates to a pipe coupling.

### Background Art

A pipe coupling is disclosed in the following patent document. This pipe coupling has a metal pipe that has a screw portion that is screwed-into a pipe body, a resin pipe that is insert molded with the metal pipe and that has a connecting portion connected to another pipe body, and a polygonal portion that is molded integrally with periphery of the resin pipe. Torque for screwing the metal pipe into the pipe body is applied to the polygonal portion. A corner portion of the polygonal portion is structured to break due to torque that is smaller than a torque at which the metal pipe and the resin pipe separate. A tool such as a monkey wrench or the like is used in applying the torque. Attention is also drawn to the disclosures of WO2014/073263, JP2008-298090, WO2014/042241 and US2013/240528.

### Prior Art Documents

### Patent Documents

Patent Document 1: Japanese Patent Application Laid-Open (JP-A) No. 2014-95410

### SUMMARY OF INVENTION

### Technical Problem

A pipe coupling, in which the metal pipe of the above-described pipe coupling is replaced with a resin pipe and that is entirely made of resin, is being developed by the inventors of the present application. The pipe coupling that is made of resin is excellent with regard to the lightening of weight, and further, is excellent with regard to a reduction in cost. By the way, as compared with a metal pipe, the mechanical strength of a resin pipe is low, and further, dispersion arises in the torque that is inputted to the polygonal portion from tools because of manual application. For example, in a case in which the pipe coupling is used as the pipe coupling of a water supply pipe, there is room for improvement at the pipe coupling that is made of resin, in order for fastening torque that is suitable for preventing water leakage to be inputted, and for excessive fastening torque at which breakage does not arise not to be inputted.

In view of the above-described circumstances, an object of the present invention is to provide a pipe coupling at which suitable fastening torque is inputted and excessive fastening torque is not inputted.

### Solution to Problem

A pipe coupling relating to a first embodiment of the present invention is as claimed in claim 1.

At the pipe coupling relating to the first embodiment, the screw portion is provided at an axial direction one end portion of the pipe coupling main body that is pipe-shaped, and the torque input portion is provided at the axial direction intermediate portion of the pipe coupling main body. The torque input portion is a polygonal shape having, in the peripheral direction, plural tool contacting surfaces to which torque is inputted. Further, the concave portion that is recessed in the radial direction are provided at the tool contacting surfaces.

Here, the division value that is obtained by dividing the length L1 in the axial direction of the tool contacting surface except for the concave portions by the length L2 in the axial direction of the tool contacting surface including the concave portions is 0.18 to 0.88. Because the division value is greater than or equal to 0.18, in the case of a pipe coupling of a water supply pipe for example, a suitable torque that makes it possible to prevent water leakage can be inputted to the torque input portion. On the other hand, because the division value is less than or equal to 0.88, in a case in which excessive torque that is such that the pipe coupling main body reaches breakage is inputted to the torque input portion, stress concentrates at the corner portion of the torque input portion due to the concave portion, and breakage arises at the corner portion. Therefore, because force from the tool is not applied to the corner portion after the corner portion breaks, excessive torque is not inputted to the torque input portion.

In a pipe coupling relating to a second embodiment of the present invention, in the pipe coupling relating to the first embodiment, the division value is from 0.62 to 0.75.

In accordance with the pipe coupling relating to the second embodiment, operation obtained by the pipe coupling relating to the first embodiment can be obtained within a practical range.

In the pipe coupling relating to the first embodiment of the present invention, the pipe coupling main body, the screw portion and the torque input portion are molded integrally of a resin material.

In accordance with the pipe coupling relating to the first embodiment, because the pipe coupling main body, the screw portion and the torque input portion are molded integrally of a resin material, these regions are molded integrally as a single part from the same material. Therefore, the number of parts of the pipe coupling can be reduced, and the structure of the pipe coupling can be simplified. In addition, because the pipe coupling is molded from a resin material that is light-weight as compared with a metal material, lightening of the weight of the pipe coupling can be devised.

In a pipe coupling relating to a third embodiment of the present invention, in the pipe coupling relating to the first embodiment or the second embodiment, the length L1 is set in a saturation range in which torque, by which the pipe coupling main body reaches breakage, is constant with respect to an increase in the length L1.

In accordance with the pipe coupling of the third embodiment, a saturation region in which the maximum torque, at which the pipe coupling main body reaches breakage, is constant with respect to an increase in the surface area of the tool contacting surface, was discovered. If the surface area of the tool contacting surface is set in the saturation region, dispersion in the maximum torque can be reduced effectively. Therefore, because the corner portion can be broken as planned before the pipe coupling main body reaches breakage, suitable torque is inputted to the torque input portion, and excessive torque is not inputted thereto. In addition, because the length L1 in the axial direction of the tool contacting surface except for the concave portion can be set to, for example, a length that is easy for the tool to catch on, the applicability of the pipe coupling can be improved.

In a pipe coupling relating to a fourth embodiment of the present invention, in the pipe coupling relating to any one of the first embodiment through the third embodiment, the length L1 is a sum total of a plurality of lengths Ln in the axial direction of the tool contacting surfaces that are partitioned by the concave portion, and a division value obtained by dividing the length Ln by the length L2 is set to be less than or equal to 1/3.

In accordance with the pipe coupling relating to the fourth embodiment, the length L1 in the axial direction of the tool contacting surface except for the concave portion is the sum total of the plural lengths Ln in the axial direction of the tool contacting surface that is partitioned by the concave portions. The length L2 in the axial direction of the tool contacting surface including the concave portions is a length obtained by adding the total sum of the lengths in the axial direction of the concave portions to the length L1. When the division value obtained by dividing the length Ln by the length L2 is set to be less than or equal to 1/3, the corner portion can be broken due to the concave portion before the pipe coupling main body reaches breakage, and the wall thickness in the axial direction and the radial direction of the torque input portion can be made to be locally thin by the concave portion. For example, in a case in which the pipe coupling main body is formed by integral molding of a resin material by a mold, by making the wall thickness in the axial direction of the torque input portion be thin locally, the pressure that is applied to the resin material that is injected into the mold increases. Therefore, because discharging of the air, which is mixed in the mold, to the exterior of the mold is promoted, the generation of voids at the pipe coupling main body after molding can be suppressed effectively.

In a pipe coupling relating to a fifth embodiment of the present invention, in the pipe coupling relating to the fourth embodiment, the length Ln is in a range of from 1 mm to 3 mm, and the length L2 is in a range of from 5 mm to 13 mm.

In accordance with the pipe coupling relating to the fifth embodiment, due to the length Ln, the length L2 being set to the above-described numerical values, operation in accordance with the pipe coupling relating to the fourth embodiment can be obtained within a practical range.

In a pipe coupling relating to the first embodiment of the present invention, the concave portion is provided at the tool contacting surfaces except for at corner portions of a polygonal shape of the torque input portion.

In accordance with the pipe coupling relating to the first embodiment, because the concave portion is provided at the tool contacting surfaces except for the corner portions, the concave portion is not provided at the corner portions. Therefore, because concentrations of stress that arise at the corner portions of the torque input portion are reduced, the strength of the corner portion can be increased. For example, in a case in which there is an upper limit of the length L2 in the axial direction of the tool contacting surface, a suitable fastening torque can be inputted to the torque input portion, while the length L2 is set within the range of the upper limit. On the other hand, when excessive fastening torque is inputted to the torque input portion, the corner portion is broken, and excessive torque is not inputted to the torque input portion.

In a pipe coupling relating to the first embodiment of the present invention, the pipe coupling main body is formed by integral molding of a resin material by a mold, and a region that corresponds to a resin injection opening of the mold is provided at at least one place at an outer periphery of the torque input portion, and the concave portion is provided at the tool contacting surfaces except for at a weld portion where the resin material, which has been injected in from the resin injection opening, joins together.

In accordance with the pipe coupling relating to the first embodiment, the pipe coupling main body is formed by integral molding of a resin material by a mold. A resin injection opening is provided at at least one place at the mold, and a region that corresponds to the resin injection opening is provided at the outer periphery of the torque input portion. Here, the concave portion is provided at the tool contacting surfaces except for at a weld portion where the resin material, which has been injected-in from the resin injection opening, joins together. Namely, the weld portion is provided at a region of the torque input portion that is other than at the concave portion and at which the wall thickness in the radial direction is thick. Therefore, because the joined surface area of the weld portion can be increased, the strength of the weld portion can be improved, and the weld portion becoming the origin of breakage can be suppressed effectively or prevented.

### Advantageous Effects of Invention

The present invention has the excellent effect of being able to provide a pipe coupling to which suitable fastening torque is inputted and to which excessive fastening torque is not inputted.

### BRIEF DESCRIPTION OF DRAWINGS

Fig. 1 is a half-cut cross-sectional view of a pipe coupling that relates to a first embodiment of the present invention and is seen from a radial direction.
Fig. 2 is a cross-sectional view seen from an axial direction of the pipe coupling at cutting line A-A shown in Fig. 1.
Fig. 3 is a perspective view of the pipe coupling shown in Fig. 1.
Fig. 4(A) is a side view in which a torque input portion of the pipe coupling relating to the first embodiment is seen from the radial direction, Fig. 4 (B) is a side view of a torque input portion of a pipe coupling relating to a comparative example, and Fig. 4 (C) is a correlation drawing of length in the axial direction of the torque input portion of the first embodiment and fastening limit torque (maximum torque) that is inputted to the torque input portion.
Fig. 5 is a schematic drawing of the torque input portion of the pipe coupling relating to the first embodiment and a tool as seen from the axial direction, and illustrates application work.
Fig. 6(A) is a perspective view of main portions of the torque input portion that shows the distribution of stress that arises due to input of torque, and Fig. 6 (B) is a perspective view of main portions of the torque input portion that corresponds to Fig. 6 (A) and shows a state in which a corner portion has broken.
Fig. 7(A) is a side view of a pipe coupling that relates to a second embodiment of the present invention and is seen from a radial direction, Fig. 7 (B) is a side view of a pipe coupling that relates to a first modified example and corresponds to Fig. 7 (A), Fig. 7 (C) is a side view of a pipe coupling that relates to a second modified example and corresponds to Fig. 7 (A), and
Fig. 7 (D) is a side view of a pipe coupling that relates to a third modified example and corresponds to Fig. 7 (A).

### DESCRIPTION OF EMBODIMENTS

### [First Embodiment]

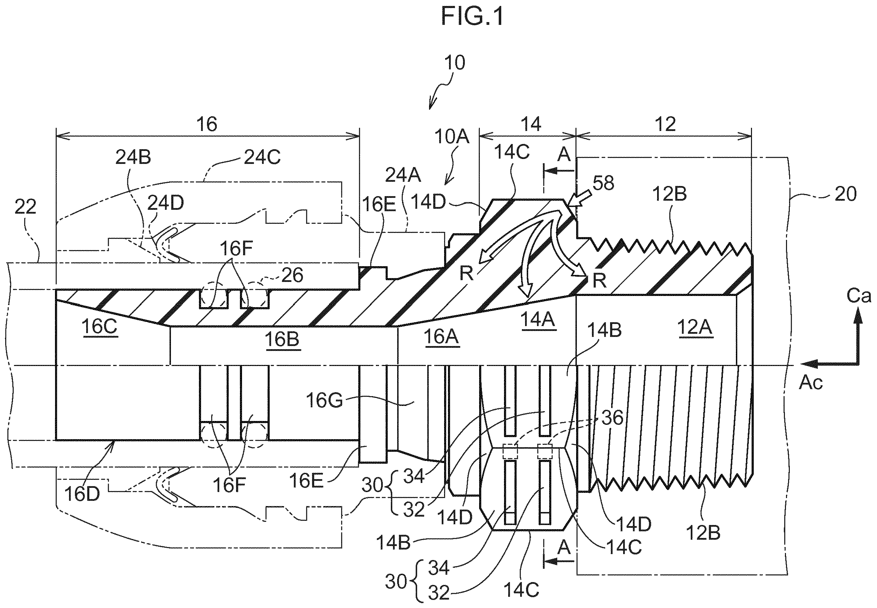

A pipe coupling relating to a first embodiment of the present invention is described by using Fig. 1 through Fig. 6. Note that, in the drawings, reference letter Ac that is shown appropriately indicates the axial direction of the pipe coupling, and reference letter Ca indicates the radial direction heading toward the outer periphery from the axial center of the pipe coupling.

### (Structure of Pipe Coupling)

As shown in Fig. 1 through Fig. 3, a pipe coupling 10 relating to the present embodiment has a pipe coupling main body 10A that is formed of a resin material. The pipe coupling main body 10A is structured to have a first pipe connecting portion 12, a torque input portion 14 and a second pipe connecting portion 16 that are arrayed successively along the axial direction Ac. In other words, the first pipe connecting portion 12 is provided at one end portion in the axial direction Ac of the pipe coupling main body 10A, and the second pipe connecting portion 16 is provided at the other end portion in the axial direction Ac. The torque input portion 14 is provided at the intermediate portion in the axial direction Ac of the pipe coupling main body 10A. In Fig. 1, the pipe coupling 10 connects a first pipe body 20 shown by the one-dot chain line and a second pipe body 22 shown by the two-dot chain line that serve as pipe bodies, and is structured as a flow path of fluid that flows between the first pipe body 20 and the second pipe body 22. The fluid includes liquids such as water, hot water, oil, liquid chemicals, or the like, or gasses such as air, gas or the like. Note that, in the present embodiment, the axial direction Ac is rectilinear, but the axial direction of a pipe coupling that is, for example, elbow-shaped, cheese-shaped, or curved may be bent, branched, or curved. Pipe couplings having these shapes and axial directions are included in the pipe coupling 10 relating to the present invention. Further, the first pipe body 20 is not limited to a pipe body that is a metal pipe or the like. Members that are connected in applications of general water / hot water supply pipes, such as other couplings or faucet fixtures, plumbing fixtures, water heaters and the like, are included as the first pipe body 20. The same holds for the second pipe body 22 as well.

In the present embodiment, because the pipe coupling main body 10A is formed of a resin material, of course, the first pipe connecting portion 12, the torque input portion 14 and the second pipe connecting portion 16 are formed of a resin material. In further detail, the first pipe connecting portion 12, the torque input portion 14 and the second pipe connecting portion 16 are molded integrally by a molding method that uses a resin molding mold. Polyphenylenesulfide resin (PPS) is used as a suitable resin material, and this resin material has excellent heat resistance, chemical resistance and the like. Further, in a case in which glass fibers are mixed in a 40 wt.% ratio into the resin material, the pipe coupling 10 that has excellent cracking resistance and creep deformation resistance can be formed.

The first pipe connecting portion 12 of the pipe coupling 10 is a hollow cylindrical shape. A pipe interior 12A of the first pipe connecting portion 12 is structured as a flow path through which fluid flows in the axial direction. The outer peripheral region of the first pipe connecting portion 12 is a screw portion 12B that is screwed-into the first pipe body 20 (see Fig. 1). The diameter of the screw portion 12B increases slightly from the first pipe body 20 side toward the torque input portion 14 side, and the screw portion 12B is structured by a tapered screw.

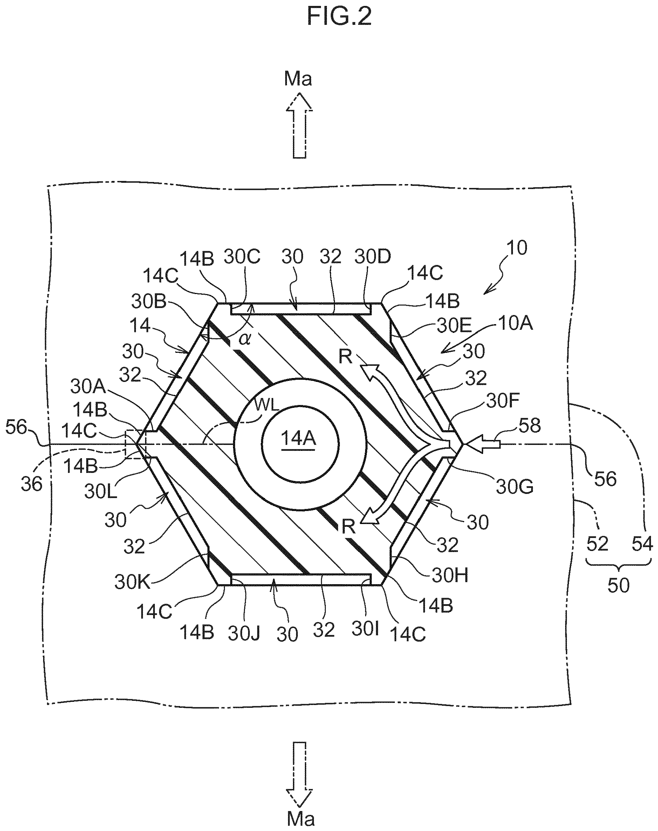

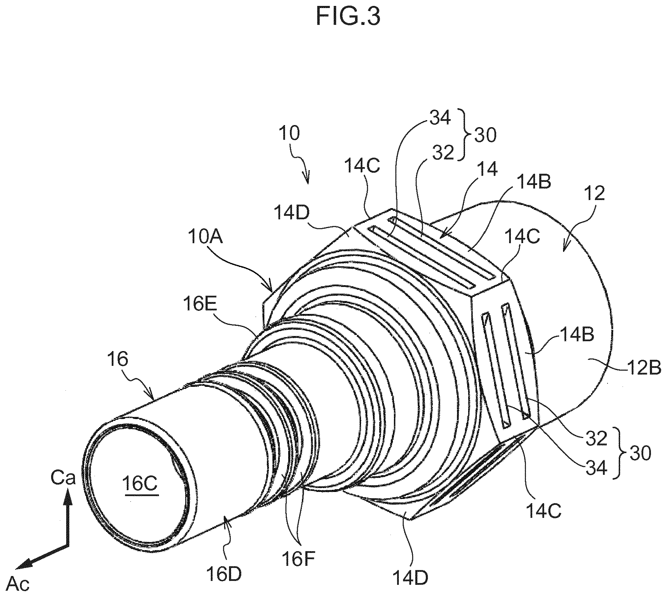

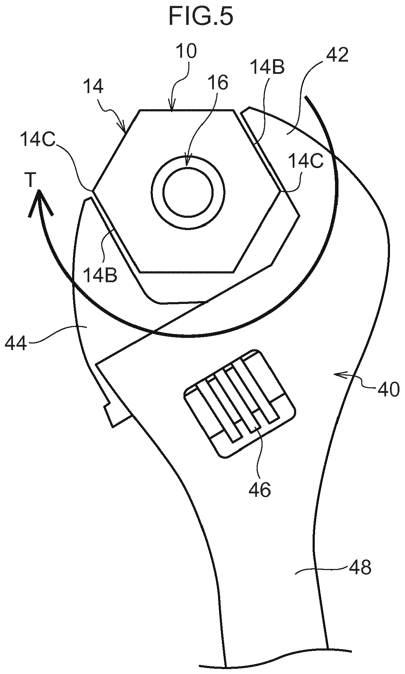

The torque input portion 14 is provided at the side of the first pipe connecting portion 12 that is opposite the first pipe body 20 side, and is a hollow polygonal tube shape whose axial center coincides with the axial center of the first pipe connecting portion 12. A pipe interior 14A of the torque input portion 14 communicates with the pipe interior 12A of the first pipe connecting portion 12, and is structured as a flow path of fluid. Moreover, the pipe interior 14A is a tapered shape whose diameter decreases from the first pipe connecting portion 12 side toward the second pipe connecting portion 16 side. Plural tool contacting surfaces 14B, to which the torque of screwing the first pipe connecting portion 12 into the first pipe body 20 is inputted by a tool (see Fig. 5, reference numeral 40), are provided along the peripheral direction at the outer periphery of the torque input portion 14. In the present embodiment, the tool contacting surfaces 14B are structured as rectangular surfaces whose length direction is the peripheral direction and whose short-side direction is the axial direction Ac, and six of the tool contacting surfaces 14B are disposed in the peripheral direction. As shown in Fig. 2 and Fig. 3, when viewed from the axial direction Ac, the contour shape of the torque input portion 14 is structured by a hexagonal shape, in the same way as the contour shape of a hexagonal nut or the contour shape of a hexagonal bolt head.

Corner portions 14C are provided at the peripheral direction ends of the tool contacting surfaces 14B, between one of the tool contacting surfaces 14B and the other one tool contacting surface 14B that is adjacent thereto in the peripheral direction. As shown in Fig. 2, inner angle α of the corner portion 14C is set to be 120° here. Further, as shown in Fig. 1 and Fig. 3, chamfered portions 14D are provided at the both end portions in the axial direction Ac of the corner portion 14C.

As shown in Fig. 1 and Fig. 3, the second pipe connecting portion 16 is provided at the side of the torque input portion 14 that is opposite the first pipe connecting portion 12 side, and is a hollow cylindrical shape whose axial center coincides with the axial center of the torque input portion 14. A pipe interior 16A at the torque input portion 14 side of the second pipe connecting portion 16 communicates with the pipe interior 14A of the torque input portion 14, and is a tapered shape whose diameter decreases continuously with the pipe interior 14A. A pipe interior 16B, which is positioned at the intermediate portion in the axial direction Ac of the second pipe connecting portion 16, communicates with the pipe interior 16A and is the same diameter along the axial direction Ac. A pipe interior 16C at the second pipe body 22 side of the second pipe connecting portion 16 communicates with the pipe interior 16B, and is a tapered shape whose diameter increases from the pipe interior 16B toward the second pipe body 22. The pipe interior 16A, the pipe interior 16B and the pipe interior 16C are structured as flow paths of fluid.

As shown in Fig. 1, the second pipe body 22 is inserted onto and connected with the outer peripheral region of the second pipe connecting portion 16. A positioning portion 16E, whose diameter is enlarged and that abuts the final end of the second pipe body 22 and that carries out positioning of the final end, is provided at the outer periphery of the torque input portion 14 side of a joining portion 16D. Groove portions 16F, whose diameters are reduced and that are disposed along the peripheral direction, are provided in the intermediate portion in the axial direction Ac of the joining portion 16D. Although the arranged number thereof is not limited, here, two of the groove portions 16F are provided so as to be apart in the axial direction Ac. O-rings 26 that are shown by the dashed lines are fit into the groove portions 16F, and this is a structure in which the air-tightness or the water-tightness between the joining portion 16D and the second pipe body 22 is improved by the O-rings 26. A press-fit portion 16G is provided between the torque input portion 14 and the positioning portion 16E of the second pipe connecting portion 16. The press-fit portion 16G is a tapered shape whose diameter increases from the positioning portion 16E toward the torque input portion 14.

As shown in Fig. 1, at the second pipe connecting portion 16, there is a structure in which a pipe-like body 24A, which is made of resin and is shown by an imaginary line, is provided at the periphery of the second pipe body 22 from the intermediate portion in the axial direction Ac of the joining portion 16D to the press-fit portion 16G. The one end portion at the torque input portion 14 side of the pipe-like body 24A is press-fit into the press-fit portion 16G, and the other end portion of the pipe-like body 24A is structured so as to surround the outer periphery of the second pipe body 22. Further, at the end portion in the axial direction Ac of the joining portion 16D, a release ring 24B that is made of resin and is shown by an imaginary line is provided at the periphery of the second pipe body 22, and a lock ring 24D is provided between the pipe-like body 24A and the release ring 24B. Moreover, a cap 24C that is made of resin and is shown by an imaginary line is provided at the peripheries of the pipe-like body 24A and the release ring 24B. Note that, at the pipe coupling 10 relating to the present embodiment, the above-described O-rings 26 and second pipe body 22 and the like are assembled in advance before application.

At the pipe coupling 10 that is structured in this way, as shown in Fig. 1 through Fig. 3, a concave portion 30, which is recessed in the radial direction Ca from the tool contacting surface 14B, is provided in the tool contacting surface 14B of the torque input portion 14. In the present embodiment, the concave portion 30 is structured by a long groove 32 and a long groove 34 whose length directions are the peripheral direction and whose short-side directions are the axial direction Ac. In further detail, the concave portion 30 is structured so as to have two long grooves that are the long groove 32 and the long groove 34, which are disposed apart from one another in the axial direction Ac and parallel to one another, at each of all of (the six of the) tool contacting surfaces 14B. The respective groove lengths and groove widths of the long groove 32 and the long groove 34 are set to be the same dimensions.

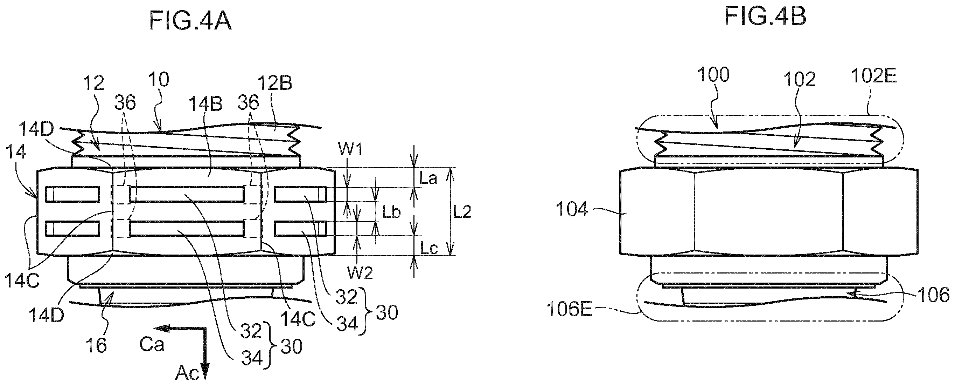

Moreover, as shown in Fig. 4(A), in the axial direction Ac, length La from the first pipe connecting portion 12 side end of the tool contacting surface 14B to the long groove 32, length Lb from the long groove 32 to the long groove 34, and length Lc from the long groove 34 to the second pipe connecting portion 16 side end of the tool contacting surface 14B, are the same dimension. Length L1, which is the total of the length La, the length Lb and the length Lc, is the length in the axial direction Ac of the tool contacting surface 14B, excluding groove width W1 of the long groove 32 and groove width W2 of the long groove 34 (excluding the concave portion 30). In other words, the length L1 is the total sum of the plural axial direction lengths Ln (length Ln is length La, length Lb or length Lc) of the tool contacting surface 14B that is partitioned by the concave portion 30. The length (including the concave portion 30), which is obtained by adding the groove width W1 of the long groove 32 and the groove width W2 of the long groove 34 to the length L1, is length L2 in the axial direction Ac of the tool contacting surface 14B.

As shown in Fig. 5, the concave portion 30 is structured such that, when excessive torque is inputted to the torque input portion 14 by the tool 40, the corner portion 14C of the tool contacting surface 14B is broken by the tool 40 before at least a portion of the pipe coupling main body 10A reaches breakage. Here, breakage of the pipe coupling main body 10A is a state that includes breakage on a small scale, such as cracks or the like. Further, breakage of the corner portion 14C is a state in which the corner portion 14C is crushed by the tool 40, or is deformed, and the tool 40 cannot catch on the corner portion 14C.

In the present embodiment, the concave portion 30 is not provided at the corner portions 14C of the tool contacting surfaces 14B. In further detail, the concave portion 30 is not provided at regions 36, which are surrounded by the dashed lines shown in Fig. 1 and Fig. 4(A) and that are between the long groove 32, the long groove 34 and the boundaries with the other tool contacting surfaces 14B that are adjacent in the peripheral direction to the tool contacting surface 14B. In other words, the respective regions of the peripheral end portions that are the length La, the length Lb, the length Lc of the tool contacting surface 14B, are connected together and are rib-shaped, and the long groove 32 and the long groove 34 are not provided at the regions 36.

### (Structure of Resin Molding Mold)

Here, the contour shape of a resin molding mold (mold) 50 that is used in manufacturing the pipe coupling 10 is shown as the imaginary line in Fig. 2. In the present embodiment, the resin molding mold 50 has a first molding mold 52, which molds the half-region running along the axial direction Ac of the pipe coupling 10 including three of the tool contacting surfaces 14B of the torque input portion 14, and a second molding mold 54 that molds the other half-region of the pipe coupling 10 including the other three tool contacting surfaces 14B. In the present embodiment, parting line 56 that is the border between the first molding mold 52 and the second molding mold 54 is at a position facing the corner portion 14C. In resin molding, the pipe coupling 10 is molded due to a resin material that has fluidity being injected into the cavity interior that is formed by the first molding mold 52 and the second molding mold 54, and the resin material being hardened. In the present embodiment, as shown in Fig. 1 and Fig. 2, an injection gate 58, which serves as a resin injection opening of the resin molding mold 50, is provided at a position corresponding to one of the corner portions 14C along the parting line 56 of the torque input portion 14.

As shown in Fig. 2, as seen from the axial direction Ac, flow R of the resin material is divided in two upward and downward at the periphery of the pipe interior 14A from the injection gate 58, and thereafter, is joined into one. This region that is joined and hardened is a weld portion WL, and, as shown by the one-dot chain line, the weld portion WL is formed along the radial direction Ca of the torque input portion 14. The weld portion WL is formed to be at the side of the pipe interior 14A which side is exactly opposite the position of the injection gate 58. The region at which this weld portion WL is formed is the corner portion 14C, and, as described above, by making the corner portion 14C be the regions 36, the concave portion 30 is not provided at the regions 36.

Further, because the pipe coupling 10 is molded by the resin molding mold 50, as shown in Fig. 2, the surface directions of inner walls 30B through 30E, 30H through 30K, which run along the short-side directions of the long grooves 32 and the long grooves 34 (the axial direction Ac), coincide with mold releasing direction Ma of the resin molding mold 50. Due thereto, release from the mold is possible without catching on the resin molding mold 50. In addition, surface directions of inner walls 30A, 30F, 30G, 30L, which run along the short-side directions of the long grooves 32 and the long grooves 34, are orthogonal to the mold releasing direction Ma.

### (Operation and Effects of Present Embodiment)

At the pipe coupling 10 relating to the present embodiment, as shown in Fig. 1 through Fig. 3, the screw portion 12B is provided at one end portion in the axial direction Ac of the pipe coupling main body 10A, and the torque input portion 14 is provided at the intermediate portion in the axial direction Ac of the pipe coupling main body 10A. The torque input portion 14 is a polygonal shape having, in the peripheral direction thereof, the plural tool contacting surfaces 14B to which torque is inputted. Further, the concave portion 30 is provided in the tool contacting surfaces 14B.

Here, the pipe coupling main body portion 10A is molded of a resin material. Namely, the pipe coupling main body 10A, the screw portion 12B, the torque input portion 14, and the joining portion 16D are molded integrally as a single part from the same resin material. Therefore, the number of parts of the pipe coupling 10 can be reduced, and the structure of the pipe coupling 10 can be made to be simple. Moreover, because the number of parts is reduced and the structure is made to be simple, the manufacturing cost and the parts costs of the pipe coupling 10 can be made to be inexpensive. Further, because the pipe coupling main body 10A is molded of a resin material that is light-weight as compared with a metal material, lightening of the weight of the pipe coupling 10 can be devised. In addition, because regions that are insert-molded of different types of materials do not exist at the pipe coupling 10, separation between different types of materials does not arise when torque is inputted to the torque input portion 14.

Further, at the pipe coupling 10 relating to the present embodiment, when excessive fastening torque (maximum torque Tmax) that is greater than prescribed is inputted to the torque input portion 14, the corner portion 14C of the polygonal shape of the torque input portion 14 is broken due to the concave portion 30. For example, the tool 40 that is shown in Fig. 5 is used for the inputting of torque, and the tool 40 is a monkey wrench here. The monkey wrench is structured to have a fixed jaw 42 and an adjustable jaw 44 that nip two opposing tool contacting surfaces 14B of the torque input portion 14, an adjusting gear 46 by which the position of the adjustable jaw 44 can be adjusted, and a handle 48 by which manual torque is applied. In the present embodiment, because the screw portion 12B is a right screw, when viewing the first pipe connecting portion 12 side from the torque input portion 14 side in the axial direction Ac, the tool 40 is rotated in the clockwise direction, and the screw portion 12B is screwed-in into the first pipe body 20. At this time, torque T is inputted to the torque input portion 14 from the tool 40 in the rotating direction of the tool 40, and the torque T is applied to the tool contacting surfaces 14B and the corner portions 14C. In a case in which excessive fastening torque that is greater than prescribed is inputted to the torque input portion 14 by using the tool 40, stress concentrates at the corner portion 14C, and the corner portion 14C is broken, and the tool 40 cannot catch on the corner portion 14C, and therefore, excessive fastening torque is not inputted to the torque input portion 14.

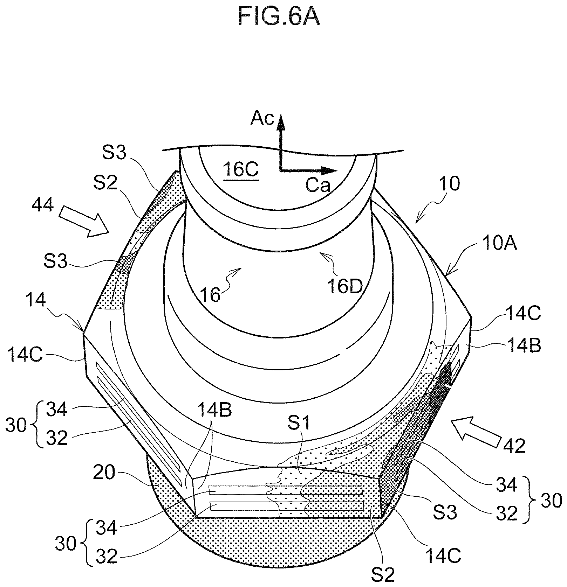

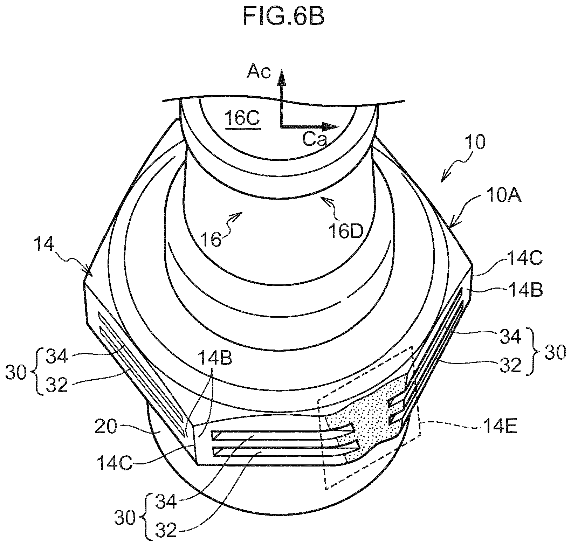

Further, at the pipe coupling 10 relating to the present embodiment, there is a structure in which the concave portion 30 causes the corner portion 14C to break before the screw portion 12B or the joining portion 16D reaches breakage. As shown in Fig. 1 through Fig. 3 and Fig. 4(A), the concave portion 30 is provided at the torque input portion 14, and the concave portion 30 is structured by the long groove 32, the long groove 34 that are concave and are recessed in the radial direction from the tool contacting surface 14B. When the torque T is inputted to the torque input portion 14 by using the tool 40, as shown in Fig. 6(A), stresses S1 through S3 are applied to the tool contacting surfaces 14B that contact the fixed jaw and the adjustable jaw 44 of the tool 40. In order to clarify the strengths and the state of distribution of the stresses, for convenience, the stresses S1 through S3 are shown so as to be divided into three levels. The stress S3 is the largest stress, and the stresses S2, S1 are successively smaller stresses. The large stress S3 arises at the corner portion 14C at the peripheral direction final end to which the torque T is applied from the peripheral direction intermediate portion of the tool contacting surface 14B that contacts the tool 40. The stress S2 concentrates at the corner portion 14C of the torque input portion 14. The stress S1 arises from the peripheral direction intermediate portion of the tool contacting surface 14B that contacts the tool 40, to the tool contacting surface 14B that does not contact the tool 40 and is at the next stage in the peripheral direction. Before at least one of the screw portion 12B and the press-fit portion 16G in particular of the joining portion 16D that are shown in Fig. 1 reaches breakage, as shown in Fig. 6(B), the corner portion 14C of the peripheral direction end of the tool contacting surface 14B is broken by the tool 40 due to the concave portion 30. In Fig. 6(B), the broken region is indicated by reference numeral 14E. Therefore, because catching of the tool 40 on the corner portion 14C no longer occurs, after the corner portion 14C is broken, excessive torque, which is such that the screw portion 12B or the press-fit portion 16G reaches breakage, is not inputted to the torque input portion 14. Accordingly, breakage of at least one of the screw portion 12B or the press-fit portion 16G can be prevented in advance.

A comparative example is described here. At a pipe coupling 100 shown in Fig. 4(B), the concave portion 30 of the present embodiment is not provided at a torque input portion 104. When excessive torque was inputted to the torque input portion 104, damage such as cracking, destruction, and the like was confirmed at region 102E of a first pipe connecting portion 102 that has a screw portion. Further, at the pipe coupling 100, similarly, when excessive torque was inputted to the torque input portion 104, damage such as cracking, destruction, and the like was confirmed at region 106E of a press-fit portion in a vicinity of the root of a second pipe coupling portion 106.

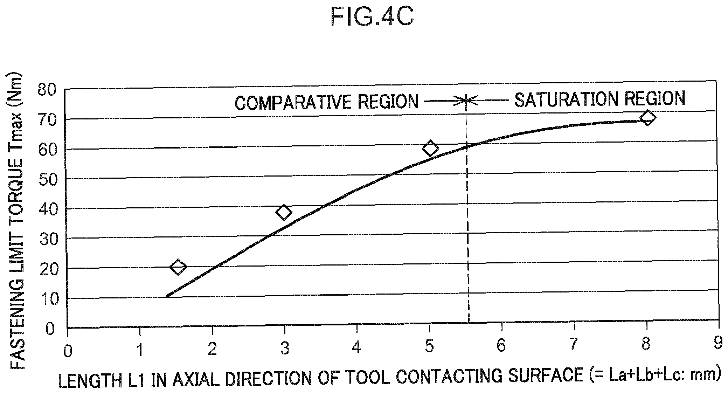

Moreover, at the pipe coupling 10 relating to the present embodiment, the correlation relationship between the length L1 (mm) of the tool contacting surface 14B except for the concave portion 30 in a case in which the length in the peripheral direction of the tool contacting surface 14B is constant, and the fastening limit torque Tmax (Nm) that is the maximum torque, is shown in Fig. 4(C). The length L1 is the sum total of the length La, the length Lb and the length Lc. When the length L1 was increased to 1.5 mm, 3 mm, and 5 mm (the surface area of the tool contacting surface 14B increases in accordance with the increase in the length L1), comparative regions where the fastening limit torque Tmax increased to approximately 20 Nm, approximately 40 Nm and approximately 60 Nm were discovered. In addition, when the length L1 exceeded 6 mm, a saturation region where the fastening limit torque Tmax is constant at less than approximately 70 Nm was discovered. When the surface area of the tool contacting surface 14B is set in the range of the saturation region, dispersion in the prescribed value of the torque can be effectively reduced, and therefore, the corner portion 14C can be broken as planned before the screw portion 12B or the press-fit portion 16G reaches breakage. At the pipe coupling 10 relating to the present embodiment, the length in the peripheral direction of the tool contacting surface 14B is constant at approximately 14 mm, and the length La, the length Lb and the length Lc are respectively 2 mm equally, and the length L1 of the tool contacting surface 14B is set to 6 mm. Further, in the present embodiment, the groove width W1 and the groove width W2 of the concave portion 30 are set to 1 mm equally. The practical range of the length La, the length Lb, the length Lc (the length Ln) is 1 mm to 3 mm, and the practical range of the groove width W1, the groove width W2 is 1 mm to 2 mm. Accordingly, the practical range of the length L1 is 3 mm to 9 mm.

In addition, at the pipe coupling 10 relating to the present embodiment, the length L1 in the axial direction Ac of the tool contacting surface 14B except for the concave portion 30 can be set to be, for example, a length that is easy for the tool 40 to catch on. When the length L1 is set to 6 mm as described above, the length L2 in the axial direction Ac of the tool contacting surface 14B including the concave portions 30 (to which the 2 mm of the groove width W1 and the groove width W2 are added) is 8 mm. At a monkey wrench that is an entirely forged product specified by Japanese Industrial Standard JIS B4604 and that has a 23° opening and is 150 mm, maximum dimension (a₂) of the thickness of the fixed jaw 42 or the adjustable jaw 44 is 11 mm, and, at a monkey wrench of 200 mm, the maximum dimension (a₂) is 14 mm. Therefore, the length L2 is the same dimension as or is a dimension slightly smaller than the dimension of the thickness of the fixed jaw 42 of the tool 40, and thus, the applicability of the pipe coupling can be improved. Note that the practical range of the length L2 is 5 mm to 13 mm.

Further, at the pipe coupling 10 relating to the present embodiment, the division value, which is obtained by the length L1 in the axial direction Ac of the tool contacting surface 14B except for the concave portion 30 being divided by the length L2 in the axial direction Ac of the tool contacting surface 14B including the concave portion 30, is 0.18 to 0.88. When the length L2 is set to 8 mm whose frequency of usage is high, at the pipe coupling 10 that is made of resin and that is used at a water pipe for example, 20 Nm is needed as fastening torque that is suitable for preventing water leakage. As shown in Fig. 4(C), the lower limit value of the length L1 at which a torque of 20 Nm is allowable is 1.5 mm. Therefore, if the length L1 is 1.5 mm and the length L2 is 8 mm, the division value is 0.18. At this time, the total of the groove width W1 and the groove width W2 is 6.5 mm. On the other hand, because there is the need to stop before 65 Nm that is an excessive fastening torque, as shown in Fig. 4(C), the upper limit value of the length L1 is 7 mm. At this time, if the length L1 is 7 mm and the length L2 is 8 mm, the division value is 0.88, and the total of the groove width W1 and the groove width W2 is 1 mm. Namely, because the division value is made to be greater than or equal to 0.18, torque that is suited to being able to prevent water leakage can be inputted to the torque input portion 14. On the other hand, because the division value is made to be less than or equal to 0.88, in a case in which excessive torque that is such that the pipe coupling main body 10A reaches breakage is inputted to the torque input portion 14, stress concentrates at the corner portion 14C of the torque input portion 14 due to the concave portion 30, and breakage arises at the corner portion 14C. Therefore, because the tool 40 does not catch on the corner portion 14C, excessive torque is not inputted to the torque input portion 14.

At the pipe coupling 10 relating to the present embodiment, the division value is made to be 0.62 to 0.75. Around 55 Nm is needed in order to increase the fastening torque and reliably prevent water leakage. As shown in Fig. 4(C), 5 mm is needed as the length L1 in order to make this torque be the fastening torque. If the length L1 is 5 mm and the length L2 is 8 mm, the division value is 0.62. On the other hand, in order to obtain a suitable fastening torque in a range not reaching 65 Nm, it is preferable to set the length L1 to 6 mm at which the fastening limit torque is made to be around 60 Nm. If the length L1 is 6 mm and the length L2 is 8 mm, the division value is 0.75. Namely, by making the division value be in the range of the above-described numerical values, within a practical range, a reliable fastening torque can be inputted to the torque input portion 14, and excessive torque that reaches breakage of the pipe coupling main body 10A is not inputted to the torque input portion 14.

Moreover, at the pipe coupling 10 relating to the present embodiment, as shown in Fig. 4(C), there was discovered a saturation region in which the maximum torque at which the pipe coupling main body 10A reaches breakage (the fastening limit torque) becomes constant, with respect to an increase in the surface area of the tool contacting surface 14B. When the surface area of the tool contacting surface 14B is set in the saturation region, dispersion in the maximum torque can be reduced effectively. Therefore, the corner portion 14C can be broken as planned before the pipe coupling main body 10A reaches breakage, and therefore, suitable torque is inputted to the torque input portion 14, and excessive torque is not inputted. In addition, because the length L1 can be set to a length that is easy for the tool 40 to catch on for example, the applicability of the pipe coupling 10 can be improved.

Further, at the pipe coupling 10 relating to the present embodiment, the value (Ln/L2), which is obtained by the above-described length Ln (the length La, the length Lb or the length Lc) being divided by the length L2, is set to be less than or equal to 1/3. Because the concave portion 30 is provided at the tool contacting surface 14B as described above, the corner portion 14C can be broken before the screw portion 12B or in particular the press-fit portion 16G of the joining portion 16D reaches breakage. In addition, because the concave portion 30 is provided at the tool contacting surface 14B, the wall thickness (the thickness of the resin material) in the axial direction Ac and the radial direction Ca of the torque input portion 14 can be made to be thin locally. When the wall thickness of the torque input portion 14 is made to be thin locally, the pressure that is applied to the resin material that is injected into the resin molding mold 50 increases. Therefore, discharging of air, which has mixed in the resin molding mold 50, to the exterior of the resin molding mold 50 is promoted, and thus, the generation of voids at the pipe coupling main body 10A after resin molding can be suppressed effectively.

Moreover, at the pipe coupling 10 relating to the present embodiment, due to the length Ln and the length L2 being set to the above-described numerical values, the above-described operation and effects can be achieved within a practical range.

Further, at the pipe coupling 10 relating to the present embodiment, as shown in Fig. 1 through Fig. 3, because the concave portion 30 is provided at the tool contacting surface 14B except for the corner portions 14C, the concave portion 30 is not provided at the corner portions 14C. Therefore, the strength of the corner portions 14C of the torque input portion 14 can be increased. For example, in a case in which there is an upper limit of the length L2 in the axial direction Ac of the tool contacting surface 14B including the concave portion 30, the screw portion 12B can be screwed-into and shut tightly with the first pipe body 20 by a suitable torque, while the length L2 is set within the range of the upper limit. On the other hand, when excessive fastening torque is inputted, the corner portion 14C is broken, and excessive fastening torque is not inputted to the torque input portion 14.

Further, at the pipe coupling 10 relating to the present embodiment, as shown in Fig. 2, the pipe coupling main body 10A is formed by integral molding of a resin material by the resin molding mold 50. The injection gate 58 is provided at at least one place at the resin molding mold 50, and a region that corresponds to the injection gate 58 is provided at the outer periphery of the torque input portion 14. Here, the concave portion 30 is provided at the tool contacting surfaces 14B excepting the weld portion WL at which the resin material, which has been injected-in from the injection gate 58, joins together. Namely, the weld portion WL is provided at a region of the torque input portion 14 that is other than at the concave portion 30 and where the wall thickness in the radial direction Ca is thick. Therefore, because the joined surface area of the weld portion WL can be increased, the strength of the weld portion WL can be improved, and the weld portion WL becoming the origin of destruction can be effectively suppressed or prevented.

### [Second Embodiment]

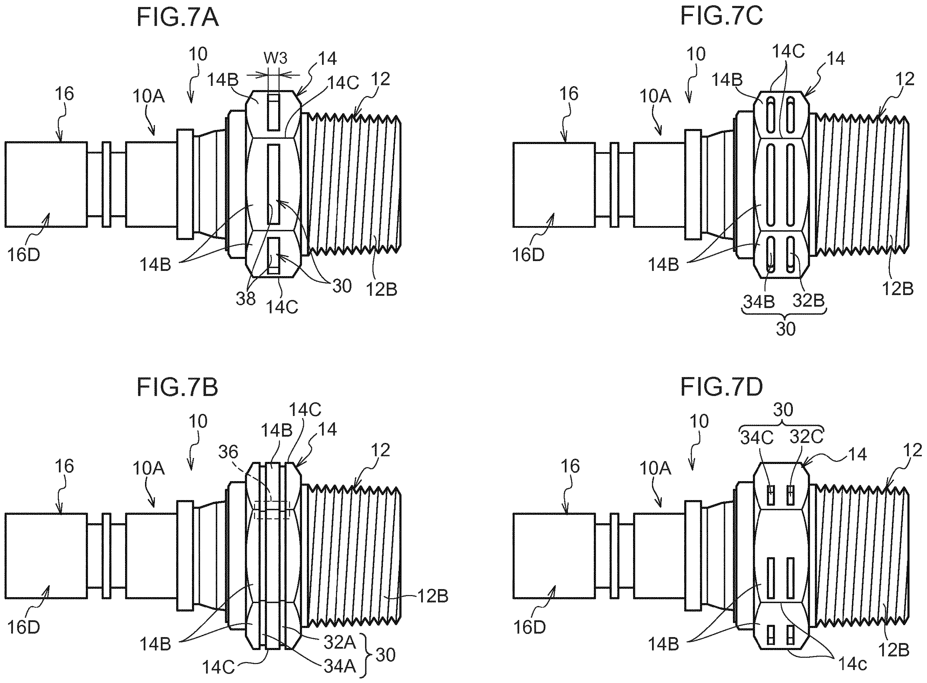

The pipe coupling 10 relating to a second embodiment of the present invention is described by using Fig. 7. Note that, in the description of the present embodiment, structures having the same functions as those of the pipe coupling 10 relating to the first embodiment are denoted by the same reference numerals, and repeat description is omitted.

In the pipe coupling 10 relating to the present embodiment that is shown in Fig. 7(A), the concave portion 30 is structured by one long groove 38 that is provided at the tool contacting surface 14B of the torque input portion 14. The length direction of the long groove 38 is the peripheral direction, and the long groove 38 has groove width W3 that is wider than the groove width W1 of the above-described long groove 32 and the groove width W2 of the long groove 34 (e.g., the groove width W3 is set to 2 mm). Note that, in the pipe coupling 10 relating to the present embodiment, the concave portion 30 is structured by the one long groove 38, and, in the pipe coupling 10 relating to the above-described first embodiment, the concave portion 30 is structured by the two long grooves that are the long groove 32 and the long groove 34. In the present invention, the concave portion 30 may be structured to include three or more long grooves in the axial direction Ac.

In the pipe coupling 10 that relates to a first modified example of the present embodiment and is shown in Fig. 7(B), the concave portion 30 is structured by a long groove 32A and a long groove 34A that are connected together at the respective tool contacting surfaces 14B that are adjacent in the peripheral direction. Namely, the long groove 32A and the long groove 34A are annular shapes that are continuous in the peripheral direction. In the first modified example, the concave portion 30 is provided also at the corner portions 14C (the regions 36) of the torque input portion 14. The first modified example is not according to the present invention.

In the pipe coupling 10 that relates to a second modified example of the present embodiment and is shown in Fig. 7(C), the concave portion 30 is structured by a long groove 32B and a long groove 34B that are not shaped as rectangular openings, and whose peripheral direction both ends are arc-shaped.

In the pipe coupling 10 that relates to a third modified example of the present embodiment and is shown in Fig. 7(D), the concave portion 30 is structured by a long groove 32C and a long groove 34C that are provided in a vicinity of the corner portion 14C at which a concentration of stress arises and that should break when excessive torque is inputted. In further detail, the concave portion 30 is provided from the peripheral direction intermediate portion of the tool contacting surface 14B to the region of the peripheral direction final end portion that the tool 40 catches-on (the region at which the stress S2 and the stress S3 that are shown in Fig. 6(A) arise).

In accordance with the pipe coupling 10 relating to the present embodiment and the pipe couplings 10 relating to the first modified example through the third modified example, similarly to the operation and effects that are obtained by the pipe coupling 10 relating to the first embodiment, operation and effects are obtained that the number of parts can be reduced and the structure can be made simple. Further, in accordance with the pipe coupling 10, the operation and effects are obtained that breakage of the screw portion 12B or the press-fit portion 16G with respect to the input of excessive torque can be prevented in advance, without deteriorating the applicability. Moreover, in accordance with the pipe coupling 10, because the pipe coupling 10 is molded of a resin material, lightening of the weight can be devised.

### [Other Embodiments]

The present invention is not limited to the above-described embodiments, and can be changed in various ways. For example, in the present invention, the contour shape of the torque input portion seen from the axial direction may be made to be a polygonal shape that is a quadrangular shape, an octagonal shape, or more. Namely, it suffices for the torque input portion to have at least two or more tool contacting surfaces in the peripheral direction. Further, in the present invention, in the case of a hexagonal torque input portion for example, concave portions may be provided at only two tool contacting surfaces that oppose one another, or concave portions may be provided at a total of four tool contacting surfaces that oppose one another at two places.

Moreover, in the present invention, the shapes of the plural long grooves, which are are disposed in the axial direction, of the concave portion may be different shapes. Further, in the present invention, the long grooves of the concave portion may be long grooves that have the shape of an oval opening. Moreover, the present invention is not limited to long grooves, and the concave portion may be structured by grooves that are concave and that have an opening shape that is square, polygonal, circular, star-shaped, or the like.

In the pipe couplings relating to the above-described embodiments, the tool contacting surfaces of the torque input portion are structured by flat surfaces. However, in the present invention, there may be tool contacting surfaces at which shallow grooves or a pattern that are smaller than concave portions are provided and serve as anti-slip portions.

Further, in the present invention, the injection gate may be provided at one place of the resin molding mold, in correspondence with the position of the peripheral direction intermediate portion of the tool contacting surface. In this case, because the weld portion is formed at the peripheral direction intermediate portion of the tool contacting surface, the concave portion is provided at the tool contacting surface at other than this region. Note that, at the resin molding mold, the number of injection gates is not limited to one place, and injection gates at two or more places may be provided.

Moreover, the screw portions of the pipe couplings relating to the above-described embodiments are male screws that are tapered shapes. However, in the present invention, this may be replaced by various types of screw shapes such as a male screw that is a parallel screw, a female screw that is a tapered shape, a female screw that is a parallel screw, or the like.

### Explanation of Reference Numerals

- 10: pipe coupling
- 10A: pipe coupling main body
- 12: first pipe connecting portion
- 12B: screw portion
- 14: torque input portion
- 14B: tool contacting surface
- 14C: corner portion
- 16: second pipe connecting portion
- 16D: joining portion
- 16G: press-fit portion
- 30: concave portion
- 32, 32A through 32C, 34, 34A through 34C, 38: long groove
- 40: tool
- 50: resin molding mold

## Claims

1. A pipe coupling (10) comprising:
a pipe coupling main body (10A) that is pipe-shaped;
a screw portion (12B) that is provided at an axial direction one end portion of the pipe coupling main body (10A);
a torque input portion (14) that is polygonal, is provided at an axial direction intermediate portion of the pipe coupling main body (10A), and has, in a peripheral direction, a plurality of tool contacting surfaces (14B) to which torque is inputted; and
a concave portion (30) that is provided in the tool contacting surfaces (14B) except for at corner portions (14C) of a polygonal shape of the torque input portion (14) and that is recessed in a radial direction from the tool contacting surfaces (14B),
wherein a division value that is obtained by a length L1 in an axial direction of the tool contacting surfaces (14B) except for the concave portion (30) being divided by a length L2 in the axial direction of the tool contacting surfaces (14B) including the concave portion (30) is from 0.18 to 0.88,
wherein the pipe coupling main body (10A), the screw portion (12B) and the torque input portion (14) are molded integrally of a resin material,
wherein the pipe coupling main body (10A) is formed by integral molding of a resin material by a mold (50), and
wherein a region that corresponds to a resin injection opening of the mold (50) is provided at at least one place at an outer periphery of the torque input portion (14), and a weld portion (WL) where the resin material, which has been injected in from the resin injection opening, joins together is provided at one of the corner portions (14C).

2. The pipe coupling (10) of Claim 1, wherein the division value is from 0.62 to 0.75.

3. The pipe coupling (10) of Claim 1 or Claim 2, wherein the length L1 is set in a saturation range in which torque, by which the pipe coupling main body (10A) reaches breakage, is constant with respect to an increase in the length L1.

4. The pipe coupling (10) of any one of Claim 1 through Claim 3, wherein the length L1 is a sum total of a plurality of lengths Ln in the axial direction of the tool contacting surfaces (14B) that are partitioned by the concave portion (30), and a division value obtained by dividing the length Ln by the length L2 is set to be less than or equal to 1/3.

5. The pipe coupling (10) of Claim 4, wherein the length Ln is in a range of from 1 mm to 3 mm, and the length L2 is in a range of from 5 mm to 13 mm.

## Patentansprüche

1. Rohrkupplung (10), Folgendes umfasst:
einen Rohrkupplungshauptkörper (10A), der rohrförmig ist,
einen Schraubenabschnitt (12B), der an einem Endabschnitt des Rohrkupplungshauptkörpers (10A) in Axialrichtung bereitgestellt wird,
einen Drehmoment-Eingabeabschnitt (14), der vieleckig ist, an einem Zwischenabschnitt des Rohrkupplungshauptkörpers (10A) in Axialrichtung bereitgestellt wird und, in einer Umfangsrichtung, mehrere Werkzeugberührungsflächen (14B), an denen ein Drehmoment eingegeben wird, aufweist, und
einen konkaven Abschnitt (30), der in den Werkzeugberührungsflächen (14B) außer an Eckabschnitten (14C) einer vieleckigen Form des Drehmoment-Eingabeabschnitts (14) bereitgestellt wird und der in einer radialen Richtung von den Werkzeugberührungsflächen (14B) aus eingezogen ist,
wobei ein Divisionswert, der dadurch erhalten wird, dass eine Länge L1 in einer Längsrichtung der Werkzeugberührungsflächen (14B) außer dem konkaven Abschnitt (30) durch eine Länge L2 in der Axialrichtung der Werkzeugberührungsflächen (14B) einschließlich des konkaven Abschnitts (30) dividiert wird, von 0,18 bis 0,88 beträgt,
wobei der Rohrkupplungshauptkörper (10A), der Schraubenabschnitt (12B) und der Drehmoment-Eingabeabschnitt (14) integral aus einem Harzwerkstoff geformt sind,
wobei der Rohrkupplungshauptkörper (10A) durch integrales Formen eines Harzwerkstoffs durch eine Form (50) geformt ist, und
wobei ein Bereich, der einer Harzeinspritzöffnung der Form (50) entspricht, an wenigstens einer Stelle an einem Außenumfang des Drehmoment-Eingabeabschnitts (14) bereitgestellt wird und ein Schweißungsabschnitt (WL), wo sich der Harzwerkstoff, der von der Harzeinspritzöffnung eingespritzt worden ist, zusammenfügt, an einem der Eckabschnitte (14C) bereitgestellt wird.

2. Rohrkupplung (10) nach Anspruch 1, wobei der Divisionswert von 0,62 bis 0,75 beträgt.

3. Rohrkupplung (10) nach Anspruch 1 oder Anspruch 2, wobei die Länge L1 in einem Sättigungsbereich festgesetzt ist, in dem ein Drehmoment, wodurch der Rohrkupplungshauptkörper (10A) den Bruch erreicht, in Bezug auf eine Zunahme bei der Länge L1 konstant ist.

4. Rohrkupplung (10) nach einem der Ansprüche 1 bis 3, wobei die Länge L1 eine Gesamtsumme mehrerer Längen Ln in der axialen Richtung der Werkzeugberührungsflächen (14B), die durch den konkaven Abschnitt (30) unterteilt werden, ist und ein Divisionswert, der durch Dividieren der Länge Ln durch die Länge L2 erhalten wird, so festgesetzt ist, dass er kleiner oder gleich 1/3 ist.

5. Rohrkupplung (10) nach Anspruch 4, wobei die Länge Ln in einem Bereich von 1 mm bis 3 mm liegt und die Länge L2 in einem Bereich von 5 mm bis 13 mm liegt.

## Revendications

1. Raccord de tuyau (10), comprenant :
un corps principal de raccord de tuyau (10A) ayant une forme en tuyau ;
une partie de vis (12B) agencée au niveau d'une partie d'extrémité, dans une direction axial du corps principal du raccord de tuyau (10A) ;
une partie d'application de couple (14) ayant une forme polygonale, agencée au niveau d'une partie intermédiaire, dans la direction axiale du corps principal du raccord de tuyau (10A), et comportant, dans une direction périphérique, plusieurs surfaces de contact avec un outil, sur lesquelles est appliqué un couple ; et
une partie concave (30) agencée dans les surfaces en contact avec l'outil (14B), à l'exception de parties de coin (14C) de forme polygonale, de la partie d'application du couple (14), et évidée dans une direction radiale par rapport aux surfaces en contact avec l'outil (14B) ;
dans lequel une valeur de division, obtenue par une longueur L1 dans une direction axiale des surfaces en contact avec l'outil (14B), à l'exception de la partie concave (30), divisée par une longueur L2, dans la direction axiale des surfaces en contact avec l'outil (14B), incluant la partie concave (30), est comprise entre 0,18 et 0,88 ;
dans lequel le corps principal du raccord de tuyau (10A), la partie de vis (12B) et la partie d'application du couple (14) sont moulés d'une seule pièce à partir d'un matériau de résine ;
dans lequel le corps principal du raccord de tuyau (10A) est formé par moulage d'une seule pièce à partir d'un matériau de résine par l'intermédiaire d'un moule (50) ; et
dans lequel une région correspondant à une ouverture d'injection de résine du moule (50) est agencée au niveau d'au moins un emplacement sur la périphérie externe de la partie d'application du couple (14), une partie de soudure (WL), où le matériau de résine injecté à partir de l'ouverture d'injection de résine est collecté, est agencée au niveau de l'une des parties de coin (14C).

2. Raccord de tuyau (10) selon la revendication 1, dans lequel la valeur de division est comprise entre 0,62 et 0,75.

3. Raccord de tuyau (10) selon les revendications 1 ou 2, dans lequel la longueur L1 est ajustée dans le cadre d'un intervalle de saturation, dans lequel le couple, par le biais duquel le corps principal du raccord de tuyau (10A) subit une cassure, est constante par rapport à un accroissement de la longueur L1.

4. Raccord de tuyau (10) selon l'une quelconque des revendications 1 à 3, dans lequel la longueur L1 constitue la somme de puiseurs longueurs Ln, dans la direction axiale des surfaces en contact avec l'outil (14B), séparées par la partie concave (30), une valeur de division obtenue en divisant la longueur Ln par la longueur L2 étant ajustée de sorte à être inférieure ou égale à 1/3.

5. Raccord de tuyau (10) selon la revendication 4, dans lequel la longueur Ln est comprise dans un intervalle allant de 1 mm à 3 mm, la longueur L2 étant comprise dans un intervalle allant de 5 mm à 13 mm.
